(19) Europäisches Patentamt / European Patent Office / Office européen des brevets

(11) **EP 3 507 877 B1**

(12) **FASCICULE DE BREVET EUROPEEN**

(45) Date de publication et mention
de la délivrance du brevet:
**09.02.2022   Bulletin 2022/06**

(21) Numéro de dépôt: **17771486.2**

(22) Date de dépôt: **30.08.2017**

(51) Classification Internationale des Brevets (IPC):
**H02H 7/26** *(2006.01)*       **H02H 3/30** *(2006.01)*
**H02H 7/122** *(2006.01)*      **H02H 7/28** *(2006.01)*

(52) Classification Coopérative des Brevets (CPC):
**H02H 3/305; H02H 7/122; H02H 7/268; H02H 7/28**

(86) Numéro de dépôt international:
**PCT/FR2017/052306**

(87) Numéro de publication internationale:
**WO 2018/042126 (08.03.2018 Gazette 2018/10)**

(54) **PROCÉDÉ DE PILOTAGE D'UNE INSTALLATION PERMETTANT LE TRANSPORT DE COURANT CONTINU DANS UN RÉSEAU TOUT EN PROTÉGEANT LEDIT RÉSEAU VIS À VIS D'UN DÉFAUT DE COURT-CIRCUIT**

VERFAHREN ZUR STEUERUNG EINER ANLAGE MIT ERMÖGLICHUNG VON GLEICHSTROMÜBERTRAGUNG IN EINEM NETZWERK BEI SCHUTZ DES NETZWERKS VOR EINEM KURZSCHLUSS

METHOD FOR CONTROLLING AN INSTALLATION ALLOWING DC CURRENT TO BE TRANSMITTED IN A NETWORK WHILE PROTECTING SAID NETWORK FROM A SHORT CIRCUIT FAULT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **02.09.2016   FR 1658165**

(43) Date de publication de la demande:
**10.07.2019   Bulletin 2019/28**

(73) Titulaires:
• **Supergrid Institute**
  **69100 Villeurbanne (FR)**
• **Université Grenoble Alpes**
  **38400 Saint-Martin-d'Hères (FR)**

(72) Inventeurs:
• **LOUME, Dieynaba**
  **69100 Villeurbanne (FR)**
• **BERTINATO, Alberto**
  **69003 Lyon (FR)**
• **RAISON, Bertrand**
  **38400 Saint-Martin-d´Heres (FR)**

(74) Mandataire: **Opilex**
  **32, rue Victor Lagrange**
  **69007 Lyon (FR)**

(56) Documents cités:
WO-A1-2013/131782       CN-A- 104 767 188
CN-A- 104 993 472       CN-A- 105 896 488
FR-A1- 2 292 362

## Description

### Domaine de l'Invention

Le domaine de l'invention est relatif au transport d'électricité, notamment à courant continu, au sein d'un réseau de transport aussi connu dans le domaine sous la dénomination de réseau à courant continu et à haute tension (de l'anglais HVDC - High Voltage Direct Current).

### Etat de la technique

Les énergies renouvelables permettent de générer de l'électricité afin d'alimenter un réseau électrique. Les sources d'énergies renouvelables sont généralement éloignées des zones de consommations, d'où le besoin de développer de nouveaux réseaux de transport capables de transporter de l'électricité sur de très longues distances tout en minimisant les pertes d'énergie. Notamment ces nouveaux réseaux peuvent être des réseaux de transport à courant continu et à haute tension qui vont être connectés aux réseaux à courant alternatif déjà existants. De tels réseaux intègrent des fonctions particulières, et une intelligence pour supporter les contraintes du réseau.

Une de ces fonctions est la gestion de la sécurité du réseau en cas d'occurrence d'un défaut dans le réseau. Pour cela, il faut pouvoir isoler le défaut le plus rapidement possible pour éviter les coupures générales. En ce sens, diverses stratégies de protection ont été développées.

Le document WO2013/131782 décrit justement une stratégie possible de pilotage d'une installation comportant un réseau muni d'un groupe de lignes de transport d'électricité munies de disjoncteurs à leurs extrémités. Ce réseau est relié à des stations de conversion aptes à fournir du courant au réseau. En cas d'occurrence d'un défaut, tous les disjoncteurs s'ouvrent dès détection du défaut pour éviter que le courant de défaut dépasse la capacité d'interruption en courant de chaque disjoncteur. Il en résulte que les disjoncteurs doivent être rapides, et qu'il n'est pas impossible dans certains cas que le défaut provoque une montée trop rapide de courant telle que tout ou partie des disjoncteurs ne puissent pas s'ouvrir du fait du dépassement de leur pouvoir de coupure. De plus, en cas de défaillance d'un disjoncteur configuré pour s'ouvrir dès la détection d'un défaut, le risque est de ne pas pouvoir isoler le défaut convenablement.

Le document WO2012123015 décrit un réseau de transport utilisant des limiteurs de courant pour protéger des zones au sein d'un même réseau de transport, il en résulte qu'en cas d'occurrence d'un défaut c'est toute une zone qui est déconnectée pour éviter la propagation du défaut dans les autres zones.

La thèse « Control and Protection of Multi-Terminal DC Transmission Systems Based on Voltage-Source Converters » publiée par Lianxiang Tang en Janvier 2003 présente une stratégie dans laquelle des disjoncteurs sont placés en sortie de convertisseurs et des interrupteurs rapides (aussi connus sous la dénomination « fast-switch ») sont placés à chaque bout de ligne. Dès la détection, tous les disjoncteurs s'ouvrent et lorsque le courant traversant les interrupteurs rapides à ouvrir est nul, ces derniers peuvent s'ouvrir pour isoler la ligne en défaut. De plus, puisque l'ouverture de tous les disjoncteurs est nécessaire pour pouvoir isoler la ligne en défaut avec les interrupteurs rapides, en cas de défaut d'ouverture d'au moins un disjoncteur la durée de la stratégie est plus longue.

On comprend donc qu'il existe un besoin d'améliorer les installations existantes, et notamment leur pilotage pour améliorer la protection du réseau.

### Objet de l'invention

L'invention, telle que définie par les revendications indépendantes 1 et 10, a pour but une installation particulière associée à un pilotage adapté de ses composants pour améliorer la sécurité du réseau.

On tend vers ce but grâce à un procédé de pilotage d'une installation pour le transport d'électricité comprenant un réseau de transport à courant continu comportant un groupe de lignes de transport d'électricité reliées entre elles, chaque ligne de transport comportant un couple de deux disjoncteurs de ligne agencés aux extrémités opposées de ladite ligne de transport. Ladite installation comporte un nombre N de stations de conversion de courant alternatif en courant continu chacune associée à un système de sécurité, chaque station de conversion étant reliée au groupe de lignes de transport et étant associée à une contribution maximale en courant de court-circuit. Plus particulièrement, chaque système de sécurité est apte à interrompre un courant continu correspondant à la contribution maximale en courant de court-circuit de la station de conversion associée, les

Le document CN105896488 décrit, en cas d'occurrence d'un défaut, une ouverture de disjoncteurs avant la localisation du défaut. Ensuite, le défaut est localisé avant de mettre en œuvre une action sur les disjoncteurs des lignes sans défaut et sur la ligne en défaut. Des disjoncteurs sont utilisés à deux extrémités de ligne pour mettre en œuvre un isolement d'un défaut : ceci nécessite l'utilisation de disjoncteurs à fort pouvoir de coupure, augmentant ainsi les coûts de fabrication de tels disjoncteurs. Le document CN104993472 propose d'utiliser des disjoncteurs du côté d'un convertisseur modulable multiniveaux et du côté de la ligne de transport. Le document propose d'utiliser un unique disjoncteur DCCB, connecté à la station de conversion et à la terre, et couplé à de simples interrupteurs combinés à des branches de décharge.

Le document CN104767188 décrit un procédé de protection d'une installation courant continu. Le document décrit une installation comprenant des lignes de transport. Pour une ligne est en défaut, des disjoncteurs DCCB de ligne s'ouvrent pour isoler la ligne en défaut, et permettre au système de continuer de fonctionner. Des courants sont mesurés pour établir un différentiel de ces courants mesurés. Si le différentiel dépasse un seuil alors un module de protection déconnecte les disjoncteurs DCCB aux extrémités de ligne.

Le document CN104767188 décrit un procédé de gestion d'un réseau électrique bouclé alimenté par un point d'alimentation unique. Le réseau utilise deux disjoncteurs disposés de part et d'autre de l'unique point d'alimentation, et configurés pour présenter un pouvoir de coupure inférieur à l'intensité de court circuit. disjoncteurs de ligne présentant chacun un pouvoir de coupure apte à interrompre un courant continu correspondant à la plus élevée des contributions maximales en courant de court-circuit des stations de conversion. Par ailleurs, le procédé comporte, consécutivement à une occurrence d'un défaut de court-circuit sur une des lignes de transport, les étapes suivantes :

- une étape d'ouverture d'au moins N-1 des systèmes de sécurité d'où il résulte que, pour chaque système de sécurité s'ouvrant, la contribution à la circulation du courant dans le groupe de lignes de transport issue de la station de conversion associée audit système de sécurité s'ouvrant est supprimée,
- une étape de recherche du défaut de court-circuit pour identifier la ligne de transport en défaut,
- une étape d'isolation, mise en œuvre après identification de la ligne de transport en défaut par l'étape de recherche, de la ligne de transport en défaut par ouverture des disjoncteurs de ligne de ladite ligne de transport en défaut.

Notamment, le procédé comporte une étape de détection du défaut de court-circuit au niveau de chaque système de sécurité déclenchant, pour chaque système de sécurité et après que le défaut de court-circuit ait été détecté au niveau dudit système de sécurité, une étape d'émission d'un signal de commande d'ouverture en direction dudit système de sécurité.

De préférence, le procédé comporte une étape de détection du défaut de court-circuit au niveau de chaque disjoncteur de ligne, et l'étape de recherche comporte, pour chaque couple de disjoncteurs de ligne d'une même ligne de transport et après que le défaut de court-circuit ait été détecté au niveau des disjoncteurs de ligne dudit couple une étape de vérification de la présence du défaut de court-circuit entre lesdits disjoncteurs de ligne dudit couple. L'étape d'isolation de la ligne de transport en défaut étant mise en œuvre seulement après constatation de la présence du défaut de court-circuit sur ladite ligne de transport en défaut par l'étape de vérification.

Avantageusement, l'étape d'isolation de la ligne de transport en défaut comporte une étape de surveillance d'au moins une caractéristique physique au niveau de chacun des deux disjoncteurs de ligne de ladite ligne de transport en défaut, chacun desdits deux disjoncteurs de ligne s'ouvrant, notamment indépendamment l'un de l'autre, dès que la caractéristique surveillée à son niveau se situe en dessous d'un seuil de référence.

Selon une réalisation, seulement N-1 des systèmes de sécurité s'ouvre(nt) consécutivement à l'occurrence du défaut de court-circuit, le système de sécurité restant fermé étant considéré dans un état de défaut.

Le procédé peut comporter une étape de détection de la défaillance du système de sécurité en état de défaut, puis une étape de déconnexion de la liaison électrique entre la station de conversion, associée audit système de sécurité en état de défaut, et le groupe de lignes de transport.

Notamment, l'étape d'isolation est telle que l'ouverture d'au moins l'un des deux disjoncteurs de ligne est mise en œuvre alors que du courant le traverse encore.

De préférence, chaque système de sécurité est choisi parmi : un système de sécurité intégré à la station de conversion et un disjoncteur indépendant agencé sur un lien électrique reliant la station de conversion, associée audit système de sécurité, audit groupe de lignes de transport.

Notamment, le procédé peut comporter une étape de restauration du réseau mise en œuvre après l'étape d'isolation de la ligne de transport en défaut, ladite étape de restauration comportant la fermeture de chaque système de sécurité s'étant ouvert au cours de l'étape d'ouverture, notamment au cours et consécutivement à l'étape de restauration les disjoncteurs de ligne de ladite ligne de transport en défaut restent ouverts de sorte que le défaut de court-circuit de ladite ligne de transport en défaut soit isolé électriquement des autres lignes de transport du groupe.

L'invention est aussi relative à une installation pour le transport d'électricité comprenant :

• un réseau de transport à courant continu comportant un groupe de lignes de transport d'électricité reliées entre elles, chaque ligne de transport comportant un couple de deux disjoncteurs de ligne agencés aux extrémités opposées de ladite ligne de transport,
• un nombre N de stations de conversion de courant alternatif en courant continu chacune associée à un système de sécurité, chaque station de conversion étant reliée au groupe de lignes de transport et étant associée à une contribution maximale en courant de court-circuit, et :

- chaque système de sécurité est apte à interrompre un courant continu correspondant à la contribution maximale en courant de court-circuit de la station de conversion associée,
- les disjoncteurs de ligne présentent chacun un pouvoir de coupure apte à interrompre un courant continu correspondant à la plus élevée des contributions maximales en courant de court-circuit des stations de conversion,
- l'installation est configurée pour envoyer un signal d'ouverture à chaque système de sécurité lorsqu'un défaut de court-circuit issu du groupe de lignes de transport est détecté au niveau dudit système de sécurité,
- pour chaque couple de disjoncteurs de ligne, l'installation est configurée pour envoyer un signal d'ouverture aux disjoncteurs de ligne dudit couple lorsque le défaut de court-circuit est détecté au niveau des disjoncteurs de ligne dudit couple et que ledit défaut de court-circuit est localisé entre les disjoncteurs de ligne dudit couple.

L'installation peut comporter les éléments logiciels et matériels de mise en œuvre du procédé de pilotage tel que décrit.

## Description sommaire des figures

L'invention sera mieux comprise à la lecture de la description qui va suivre, donnée uniquement à titre d'exemple non limitatif et faite en se référant aux dessins sur lesquels :

- la figure 1 illustre une installation permettant le transport d'électricité à courant continu selon un mode particulier de réalisation,
- la figure 2 illustre les composants de l'installation permettant de calculer la contribution d'une station de conversion à un courant de court-circuit en cas d'occurrence d'un défaut de court-circuit dans le réseau,
- la figure 3 illustre schématiquement différentes étapes d'un mode particulier de mise en œuvre du procédé de pilotage de l'installation,
- la figure 4 représente un module de protection associé à un système de sécurité,
- la figure 5 illustre un élément de protection associé à un disjoncteur de ligne,
- la figure 6 illustre une variante de l'installation de la figure 1,
- la figure 7 illustre une séquence temporelle montrant ce qu'il se passe au niveau de l'installation en cas d'occurrence d'un défaut de court-circuit au niveau d'une ligne de transport,
- la figure 8 illustre un exemple particulier d'une installation dont les lignes de transport sont agencées selon une configuration en delta,
- la figure 9 illustre, pour un premier cas, le courant du côté continu des stations de conversion de la figure 8 au cours du temps après l'occurrence d'un défaut de court-circuit dans une ligne de transport,
- la figure 10 illustre, pour le premier cas, le courant traversant les disjoncteurs de ligne de la ligne en défaut de l'installation de la figure 8 au cours du temps après l'occurrence du défaut de court-circuit,
- la figure 11 illustre, pour un deuxième cas, le courant du côté continu des stations de conversion de la figure 8 au cours du temps après l'occurrence d'un défaut de court-circuit dans une ligne de transport,
- la figure 12 illustre, pour le deuxième cas, le courant traversant les disjoncteurs de ligne de la ligne en défaut de l'installation de la figure 8 au cours du temps après l'occurrence du défaut de court-circuit.

Dans ces figures, sauf stipulation contraire, les mêmes références sont utilisées pour désigner les mêmes éléments.

## Description de modes particuliers de réalisation

En particulier, ce qui est décrit ci-après diffère de l'art antérieur en ce que l'on propose la mise en œuvre d'un procédé associé à une installation particulière qui permet notamment de supporter une défaillance d'un système de sécurité destiné à bloquer l'injection de courant dans le réseau depuis une station de conversion de courant alternatif en courant continu tout en permettant de rechercher une ligne de transport en défaut puis de l'isoler.

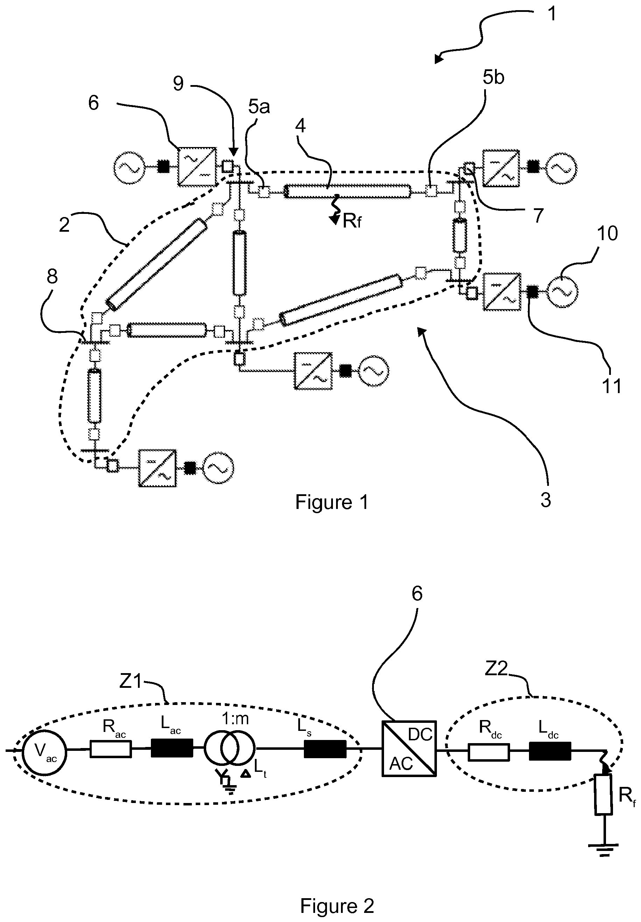

La figure 1 illustre une installation 1 pour le transport d'électricité comprenant un réseau 3 de transport à courant continu (notamment un réseau HVDC) comportant un groupe 2 de lignes de transport 4 d'électricité reliées entre elles (on comprend que ces lignes de transport 4 permettent la circulation de courant continu et sont donc reliées électriquement entre elles), notamment de sorte à permettre la circulation de courant continu au sein du groupe 2 de lignes. Chaque ligne de transport 4 comporte un couple de deux disjoncteurs de ligne 5a, 5b agencés aux extrémités opposées de ladite ligne de transport 4. Autrement dit, chaque extrémité d'une ligne de transport comporte un disjoncteur de ligne. L'installation comporte en outre un nombre N de stations de conversion 6 de courant alternatif en courant continu chacune associée à un système de sécurité 7 : on a donc aussi N systèmes de sécurité 7 chacun associé à une station de conversion 6. Chaque station de conversion 6 est reliée au groupe 2 de lignes de transport 4, et chaque station de conversion 6 est associée à une contribution maximale en courant de court-circuit. La contribution maximale est un élément de dimensionnement, autrement dit chaque station de conversion 6 est dimensionnée pour avoir une contribution maximale en courant de court-circuit. Cette contribution maximale en courant de court-circuit correspond à une contribution en courant continu que ladite station est capable d'injecter dans le réseau 3. On comprend ici que le groupe 2 est relié aux N stations de conversion 6, notamment du côté continu de chaque station de conversion 6. En particulier, chaque système de sécurité 7 est tel qu'il comporte un état fermé dans lequel il autorise la station de conversion 6 associée audit système de sécurité 7 à contribuer à la circulation du courant dans le groupe 2 de lignes de transport 4, et un état ouvert dans lequel il empêche la station de conversion 6 associée audit système de sécurité 7 de contribuer à la circulation du courant dans le groupe 2 de lignes de transport 4. Ainsi, chaque système de sécurité 7 est notamment placé côté courant continu de la station de conversion 6. L'exemple particulier de la figure 1 illustre un réseau 3 muni de sept lignes de transport 4 reliées entre elles et de cinq stations de conversion 6 pouvant contribuer à la circulation du courant au sein des lignes de transport 4 du groupe 2 du réseau, bien entendu ce qui est illustré en figure 1 n'est qu'un exemple, la topographie des liaisons entre lignes de transport pouvant être adaptée en fonction des caractéristiques souhaitées du réseau.

On comprend de ce qui a été dit ci-dessus que lorsque l'on parle de N stations de conversion 6 ou de N systèmes de sécurité 7, N est un nombre entier dont la valeur est supérieure ou égale à 2 ou 3. Le nombre total de stations de conversion 6 sera adapté en fonction des caractéristiques souhaitées de transport de courant et en particulier de la dispersion territoriale des sources de courant alternatif reliées à ces stations.

Dans la présente description, une ligne de transport 4 peut être formée par tout élément de transport apte à permettre une transmission d'une puissance électrique entre les deux extrémités de ladite ligne de transport 4. Un tel élément de transport peut, par exemple, être un câble sous-marin, un câble souterrain ou encore une ligne aérienne.

Au sein du groupe 2, au moins deux lignes de transport 4 peuvent être reliées directement entre elles notamment par l'intermédiaire d'un jeu de barres 8, et des lignes de transport 4 peuvent être reliées indirectement entre elles par l'intermédiaire d'au moins une autre ligne de transport et le cas échéant des jeux de barres 8 associés. C'est en substance ce qui est illustré en figure 1. Notamment, au sein du groupe 2 de lignes de transport 4 par « lignes de transport d'électricité reliées entre elles » on entend que chaque ligne de transport 4 du groupe 2 est reliée directement à au moins une autre ligne de transport du groupe, notamment via leurs extrémités, par l'intermédiaire d'un jeu de barres 8, un même jeu de barres 8 pouvant être utilisé pour relier directement plus de deux lignes de transport 4 entre elles. Par ailleurs, chaque station de conversion 6 peut être reliée, notamment du côté courant continu de la station de conversion 6, électriquement à un, et notamment un seul, jeu de barres 8 correspondant par un lien de connexion électrique 9, le cas échéant ce lien de connexion 9 peut comporter le système de sécurité 7 associé à ladite station de conversion 6.

Dans la présente description, un disjoncteur (par exemple un disjoncteur de ligne 5a, 5b, ou le cas échéant un système de sécurité 7 comme il le sera vu par la suite), est un système permettant sélectivement de laisser passer du courant continu ou de bloquer le passage du courant continu - on parle alors de disjoncteur à courant continu. Plus particulièrement, on dit que le disjoncteur est fermé lorsqu'il laisse passer du courant continu - on parle alors d'état fermé du disjoncteur, et est ouvert lorsqu'il bloque le passage du courant continu - on parle alors d'état ouvert du disjoncteur. Un disjoncteur peut être piloté à partir d'une consigne lui permettant de passer de son état fermé à son état ouvert ou inversement. Au sens de la présente description, un disjoncteur présente un pouvoir de coupure, le pouvoir de coupure étant défini comme une valeur maximale de courant qui le traverse pour laquelle il peut passer de l'état fermé à l'état ouvert. Le pouvoir de coupure d'un disjoncteur correspond donc à une capacité d'interruption en courant dudit disjoncteur. Autrement dit, généralement lorsque le disjoncteur est traversé par un courant supérieur à celui associé à son pouvoir de coupure, il ne s'ouvre pas car une protection associée (le relai qui sera décrit ci-après) ne lui envoie pas la consigne d'ouverture tant que le courant mesuré au niveau du disjoncteur - c'est à dire le courant traversant le disjoncteur - est supérieur au pouvoir de coupure, car sinon il y a un risque d'endommagement du disjoncteur ou de mise en route d'une protection interne pour éviter la destruction du disjoncteur. Dans le domaine, le disjoncteur est aussi connu sous l'acronyme DCCB correspondant à l'anglais « Direct Current Circuit Breaker ».

Dans le cadre des disjoncteurs de ligne 5a, 5b, lorsque les disjoncteurs de ligne 5a, 5b d'une même ligne de transport sont en état fermé cela permet la circulation de courant continu dans ladite ligne de transport entre les deux extrémités de ladite ligne de transport, et lorsque les disjoncteurs de lignes 5a, 5b d'une même ligne de transport sont à l'état ouvert, le transport de courant entre les deux extrémités de la ligne de transport est interrompu : on dit que la ligne de transport est alors isolée des autres lignes de transport du groupe 2 puisqu'elle n'assure plus sa fonction de transport de courant continu entre ses deux extrémités. Par ailleurs, lorsque pour une ligne de transport un seul des disjoncteurs de ligne est ouvert, le transport de puissance est interrompu sans pour autant que la ligne de transport soit isolée : pour isoler une ligne de transport il faut que ses deux disjoncteurs de ligne soient ouverts.

Dans la présente description, une station de conversion 6 de courant alternatif en courant continu permet par exemple de transformer un courant alternatif provenant d'une source de courant alternatif 10, comme par exemple d'un réseau d'électricité à courant alternatif ou d'un parc éolien, en courant continu en vue de l'injecter dans le réseau de transport d'électricité en courant continu. Une station de conversion 6 peut présenter ou non une fonction de coupure

**EP 3 507 877 B1**

du courant continu, ce point sera développé par la suite plus en détails. La contribution d'une station de conversion à la circulation du courant au sein du groupe 2 de lignes de transport 4 peut être telle que du courant est extrait du groupe de ligne 2 ou injecté dans le groupe de ligne 2 via la station de conversion 6 pour assurer un équilibrage de production/consommation et la stabilité du réseau, ceci peut être mis en œuvre par une fonction de contrôle interne à la station de conversion 6.

Dans la présente description, lorsque l'on parle d'une contribution d'une station de conversion 6, il s'agit de la contribution de la station de conversion 6 à la circulation de courant continu au sein de groupe 2 de lignes de transports 4 auquel elle est reliée. Par ailleurs, l'association d'un système de sécurité 7 à une station de conversion 6 est telle que le courant continu issu de la station de conversion et contribuant à la circulation du courant au sein du groupe 2 traverse ledit système de sécurité 7, notamment avant de circuler dans le groupe 2 de lignes de transport 4.

De préférence, chaque système de sécurité 7 est apte à/configuré pour interrompre un courant continu correspondant à la contribution maximale en courant de court-circuit de la station de conversion 6 associée audit système de sécurité 7. En ce sens, un système de sécurité 7 permet sélectivement de laisser passer du courant continu ou de bloquer le passage du courant continu entre la station de conversion 6 et le groupe 2 de lignes de transport 4 du réseau. On comprend de ce qui a été dit ci-dessus que la structure de l'installation est telle que chaque système de sécurité 7 permet, lorsqu'il est ouvert, de supprimer la contribution à la circulation du courant dans le groupe 2 de lignes de transport 4 d'une seule station de conversion 6 à laquelle il est associé. Un système de sécurité 7 peut être un disjoncteur, notamment du type tel que décrit précédemment, ou être intégré à une fonction de la station de conversion 6. Lorsqu'un système de sécurité 7 est un disjoncteur, il est interposé entre la station de conversion 6 et le groupe 2 de lignes de transport 4 de telle sorte que la contribution de la station de conversion 6 traverse ledit système de sécurité 7 en état fermé dudit disjoncteur. En état ouvert du disjoncteur formant le système de sécurité 7, la contribution de la station de conversion 6 associée à la circulation du courant au sein du réseau 2 est supprimée. La figure 1 montre notamment ce cas où les systèmes de sécurité 7 sont tous formés par des disjoncteurs.

La contribution maximale en courant de court-circuit d'une station de conversion 6 correspond au courant injecté lorsqu'un défaut de court-circuit apparaît à ses bornes, elle est donc indépendante du groupe de lignes 2 de transport auquel elle est reliée, mais dépend des caractéristiques de la station de conversion 6 et du réseau en courant alternatif auquel elle est reliée. Puisque cette contribution en courant de court-circuit est maximale, tout défaut de court-circuit ayant lieu au sein du groupe 2 de lignes de transport 4 ne pourra pas être alimenté en courant par ladite station de conversion 6 au-dessus de cette contribution maximale en courant de court-circuit. Le dimensionnement de chacun des systèmes de sécurité 7 de sorte à être apte à (c'est-à-dire configuré pour) interrompre un courant le traversant correspondant à la contribution maximale de la station associée permet de supprimer la contribution de la station de conversion 6 au courant de défaut dans le groupe 2 de lignes quel que soit le défaut de court-circuit dans le réseau à courant continu. En ce sens, lors de l'occurrence d'un défaut de court-circuit au niveau du groupe 2 de lignes de transport 4 du réseau (c'est à dire dans/sur une ligne de transport 4 du groupe 2), ce défaut de court-circuit pourra être détecté au niveau de chaque système de sécurité 7 qui est dimensionné pour s'ouvrir quel que soit le défaut de court-circuit au sein du groupe 2, sauf si ce système de sécurité 7 est en état de défaillance. Dans la présente description, un défaut de court-circuit correspond à une anomalie sur une ligne de transport qui provoque un court-circuit au niveau de cette dernière : on parle alors de ligne de transport en défaut. Une anomalie peut donc correspondre à un défaut d'isolement électrique comme une rupture d'isolation électrique, ou encore une erreur humaine par exemple une mauvaise fermeture d'un sectionneur de mise à la terre.

Dans la présente description, lorsqu'un défaut de court-circuit est détecté au niveau d'un système de sécurité 7 ou d'un disjoncteur de ligne 5a, 5b, on entend que le courant de défaut traverse le système de sécurité 7, ou le disjoncteur de ligne 5a, 5b, et qu'une mesure d'une ou plusieurs grandeurs physiques à proximité permet d'établir si ce courant de défaut traverse effectivement le système de sécurité 7, ou le disjoncteur de ligne 5a, 5b.

Au cours d'une phase en régime permanent de l'occurrence du défaut pour laquelle aucun des disjoncteurs de ligne 5a, 5b et des systèmes de sécurité 7 n'est ouvert et après une phase transitoire de quelques ms après que le défaut ait eu lieu, la contribution d'une station de conversion 6 au défaut de court-circuit de résistance $R_f$ aussi appelé courant de contribution au court-circuit $I_0^{avg}$, lorsque la station de conversion est un convertisseur MMC (de l'anglais « Modular Multilevel converter » ), peut être déterminée par :

$$I_0^{avg} = \frac{3}{\pi} \cdot \frac{\sqrt{\frac{2}{3}} \cdot m \cdot V_{ac}}{\sqrt{X^2 + R^2}}$$

6

$$X = (\omega \cdot L_{ac} + \omega \cdot L_t) \cdot (m)^2 + \omega \cdot L_s + \frac{1}{2} \cdot \omega \cdot L_{arm}$$

$$R = (m)^2 \cdot R_{ac} + \frac{2}{3} \cdot R_f + \frac{2}{3} \cdot R_{dc}$$

où « · » représente une simple multiplication, et en considérant le schéma de la figure 2 séparant d'un côté ce qui se passe électriquement côté courant alternatif (zone Z1) et de ce qui se passe électriquement côté courant continu (zone Z2). Les zones Z1 et Z2 sont séparées par une station de conversion 6 qui les relie. Avec $V_{ac}$ la tension de la source de courant alternatif, avec m représentant dans les équations ci-dessus le rapport de transformation du transformateur côté courant alternatif, $L_{arm}$ l'inductance au niveau de chacun des bras du convertisseur MMC, $R_f$ la résistance du défaut de court-circuit, $R_{dc}$ correspondant à la résistance équivalente de la portion de réseau située entre la station de conversion concernée et le défaut de court-circuit, $L_{dc}$ correspondant à l'inductance de la portion de réseau située entre la station de conversion concernée et le défaut de court-circuit (ici non prise en compte car on étudie le régime permanent), $L_{ac}$ correspondant à l'inductance équivalente du réseau alternatif, $L_s$ correspondant à l'inductance de filtrage des harmoniques (qui peut être négligée), $L_t$ correspondant à l'inductance du transformateur ramenée au secondaire, $R_{ac}$ correspondant à la résistance équivalente du réseau alternatif, $\omega$ étant égal à $2 * \pi * f$ avec f la fréquence nominale du réseau, et $\pi$ correspondant au nombre Pi. Ainsi, il résulte de ce qui a été dit ci-dessus que de manière générale la consigne d'ouverture d'un système de sécurité 7 est envoyée pendant la phase transitoire mentionnée car en général la phase de régime permanent n'est jamais atteinte du fait que la protection doit être rapide. De ce fait, sachant que le maximum de courant arrive durant la période transitoire, et connaissant $I_0^{avg}$, il est possible d'estimer le maximum de courant de défaut qui va avoir lieu durant la période transitoire, cette valeur estimée peut être utilisée comme référence et qui de l'ordre de 20kA.

Comme évoqué précédemment, il existe une probabilité, même si elle est faible, que l'un des systèmes de sécurité 7 puisse être en défaillance, et c'est cette défaillance que l'on souhaite pallier pour restaurer au plus vite la circulation du courant au sein du groupe 2 de lignes de transport 4 du réseau en cas d'occurrence d'un défaut de court-circuit dans (c'est-à-dire sur) une ligne de transport 4. En effet, en cas d'une défaillance d'un système de sécurité 7, ce dernier va continuer à laisser passer la contribution de la station de conversion associée à la circulation du courant au sein du réseau 3, et plus particulièrement au sein du groupe de lignes de transport 4.

C'est en ce sens, que les disjoncteurs de ligne 5a, 5b présentent chacun un pouvoir de coupure apte à, c'est-à-dire configuré pour, interrompre un courant continu correspondant à la plus élevée des contributions maximales en courant de court-circuit des stations de conversion 6 : on comprend ici que si un seul système de sécurité 7 est défaillant tel qu'il ne s'ouvre pas après une détection à son niveau du défaut de court-circuit, les disjoncteurs de ligne 5a, 5b seront eux capables de s'ouvrir pour isoler la ligne de transport 4 comportant le défaut de court-circuit car ils sont dimensionnés pour pallier au courant restant dans le groupe 2 de lignes de transport 4 lorsqu'une unique station de conversion 6 alimente toujours le défaut de court-circuit : il en résulte qu'il n'est pas nécessaire d'attendre qu'un éventuel élément de sécurité 11 (figure 1) côté courant alternatif s'ouvre en sauvegarde du système de sécurité 7.

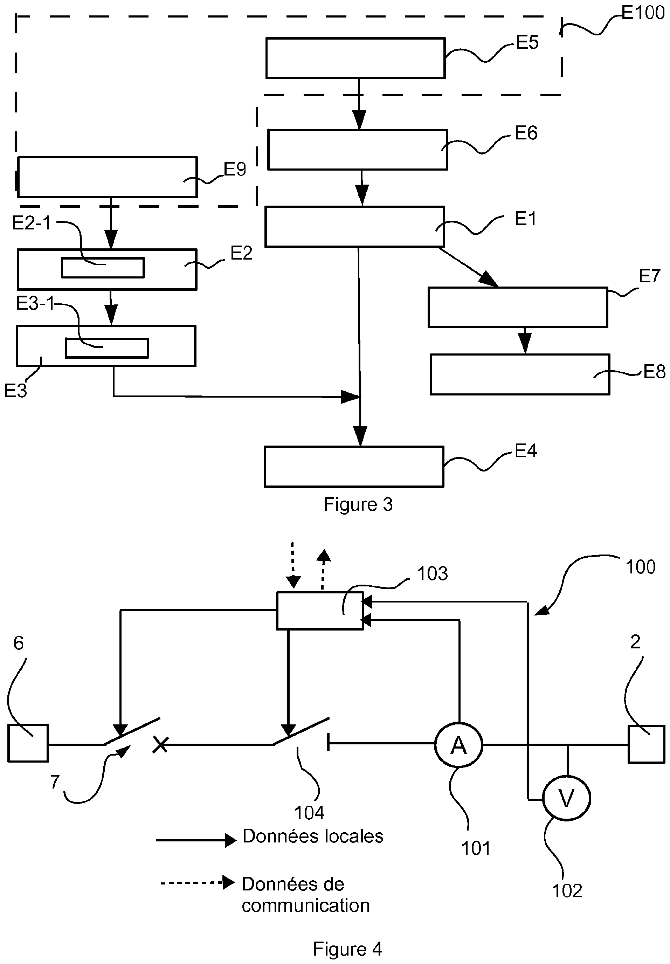

Pour améliorer la gestion de l'installation, et notamment permettre une restauration plus rapide de la circulation du courant au sein du réseau de transport à courant continu, l'architecture particulière de l'installation 1 décrite ci-avant va être associée à des étapes d'un procédé de pilotage de l'installation mises en œuvre lors de la détection d'un défaut de court-circuit au sein du réseau 3, notamment sur une ligne de transport 4 du groupe 2 entre les deux disjoncteurs de ligne 5a, 5b de ladite ligne de transport 4 alors nommée ligne de transport en défaut. Par « pilotage d'une installation », on entend le contrôle et la surveillance de cette installation ainsi que des prises de décisions quant au fonctionnement d'éléments constitutifs de cette installation comme les systèmes de sécurité ou les disjoncteurs de ligne tels que décrits. Ainsi, le procédé comporte (figure 3), consécutivement à une occurrence d'un défaut de court-circuit, notamment de résistance $R_f$, sur une des lignes de transport 4 notamment entre les deux disjoncteurs de ligne 5a, 5b de ladite ligne de transport 4, les étapes suivantes :

-   une étape d'ouverture E1 d'au moins N-1 des systèmes de sécurité 7 d'où il résulte que, pour chaque système de sécurité 7 s'ouvrant, la contribution à la circulation du courant dans le groupe 2 de lignes de transport 4 issue de la station de conversion 6 associée audit système de sécurité 7 s'ouvrant est supprimée au sein du groupe (on passe alors dans un mode dégradé transitoire impliquant une future restauration de tout ou une partie des stations de conversion à la circulation du courant au sein du groupe),

- une étape E2 de recherche du défaut de court-circuit pour identifier la ligne de transport 4 en défaut,
- une étape d'isolation E3, notamment mise en œuvre après identification de la ligne de transport 4 en défaut par l'étape de recherche E2 du défaut de court-circuit, de la ligne de transport 4 en défaut par ouverture des disjoncteurs de ligne 5a, 5b de ladite ligne de transport 4 en défaut.

On comprend de ce qui a été dit précédemment que le procédé comporte, avant l'occurrence du défaut de court-circuit, une phase de fonctionnement nominal dans laquelle les N stations de conversion 6 contribuent à la circulation de courant dans le groupe 2 de lignes de transport 4. Dans cette phase de fonctionnement nominal, les systèmes de sécurité 7 sont tous en état fermé et les lignes reliées entre elles du groupe 2 de lignes 4 ont leurs disjoncteurs de ligne qui sont, notamment tous, en état fermé. Après l'occurrence du défaut de court-circuit, le procédé passe dans une phase de fonctionnement dégradé au cours de laquelle sont mises en œuvre les étapes E1, E2, E3.

Bien entendu, le procédé peut aussi comporter une étape E4 de restauration du réseau mise en œuvre après l'étape d'isolation E3 de la ligne de transport 4 en défaut. Cette étape de restauration E4 comportant la fermeture de chaque système de sécurité 7, notamment d'au moins N-1 des systèmes de sécurité 7, s'étant ouvert au cours de l'étape d'ouverture E1. En particulier, au cours et consécutivement à l'étape E4 de restauration, les disjoncteurs de ligne 5a, 5b de ladite ligne de transport 4 en défaut restent ouverts de sorte que le défaut de court-circuit de ladite ligne de transport 4 en défaut soit isolé électriquement des autres lignes de transport 4 du groupe 2, notamment jusqu'à réparation ultérieure de la ligne de transport 4 en défaut. En ce sens après réparation, c'est-à-dire suppression du défaut de court-circuit de la ligne de transport en défaut, les disjoncteurs de ligne de la ligne de transport isolée peuvent être refermés de sorte que ladite ligne de transport puisse à nouveau participer au transport du courant continu. Ainsi, on comprend qu'au terme de l'étape de restauration E4, le procédé repasse dans une nouvelle phase de fonctionnement nominal dans laquelle chaque système de sécurité 7 s'étant ouvert au cours de la phase de fonctionnement dégradé est en état fermé et seuls les disjoncteurs de ligne 5a, 5b restés à l'état fermé au terme de la phase de fonctionnement dégradé restent en état fermé, c'est à dire que les disjoncteurs de ligne 5a, 5b s'étant ouverts restent à l'état ouvert.

En particulier, on dit qu'il résulte de l'occurrence du défaut de court-circuit une étape de détection E100 de ce défaut de court-circuit provoquant la mise en œuvre de l'étape d'ouverture E1 d'au moins N-1 des systèmes de sécurité 7, l'étape de recherche E2 de la ligne de transport 4 en défaut, et l'étape d'isolation E3. En fait, le défaut de court-circuit se propage dans le groupe 2 de lignes de transport 4 d'où il résulte qu'il est détectable au niveau de chacun des disjoncteurs de ligne 5a, 5b et de chacun des systèmes de sécurité 7 reliés au groupe 2 de lignes de transport 4. Comme évoqué, la détection d'un défaut de court-circuit au niveau d'un système de sécurité 7 peut être mise en œuvre par mesure de grandeur(s) physique(s) à proximité du système de sécurité représentative du courant traversant le système de sécurité : il est ensuite aisé de savoir si le courant de court-circuit traverse le système de sécurité.

Plus précisément, le procédé peut comporter une étape de détection E5 du défaut de court-circuit, notamment de résistance $R_f$, au niveau de chaque système de sécurité 7 déclenchant, pour chaque système de sécurité 7 et après que ledit défaut de court-circuit ait été détecté au niveau dudit système de sécurité 7, une étape d'émission E6 d'un signal de commande d'ouverture en direction dudit système de sécurité 7 en vue de mettre en œuvre l'étape E1. Notamment, le procédé est tel que dès que le défaut de court-circuit est détecté au niveau d'un système de sécurité 7, l'ordre d'ouverture de ce dernier est donné.

On comprend de ce qui a été dit précédemment qu'il est possible de distinguer deux cas. Dans un premier cas idéal, les N systèmes de sécurité 7 s'ouvrent (l'étape E1 d'ouverture permet l'ouverture des N systèmes de sécurité 7), permettant ainsi aux disjoncteurs de ligne 5a, 5b d'assurer leur fonction d'isolation de la ligne de transport 4 en défaut du groupe 2, après que le défaut ait été détecté à leur niveau, indépendamment de la sécurité de déconnexion du groupe 2 de lignes de transport 4 assurée par les systèmes de sécurité 7 : on parallélise les fonctions avec des systèmes distincts améliorant ainsi la sécurité générale de l'installation et le temps d'isolation de la ligne de transport 4 en défaut. De plus, il n'y a pas nécessité ici d'utiliser des disjoncteurs de ligne 5a, 5b ultra-rapides car l'ouverture des systèmes de sécurité 7 a pour but de faire baisser la valeur du courant circulant dans le groupe de lignes de transport 4 à un niveau permettant l'ouverture des disjoncteurs de ligne 5a, 5b. En fait, dans ce premier cas, la présence du défaut de court-circuit peut provoquer une montée de courant traversant les disjoncteurs de ligne 5a, 5b de la ligne de transport en défaut à un niveau supérieur à leurs pouvoir de coupure respectifs, l'ouverture des systèmes de sécurité 7 va permettre de faire descendre ce courant à une valeur permettant l'ouverture desdits disjoncteurs de ligne 5a, 5b. Dans un deuxième cas, seulement N-1 des systèmes de sécurité 7 s'ouvre(nt) consécutivement à l'occurrence du défaut de court-circuit, notamment de résistance $R_f$, le système de sécurité 7 restant fermé étant considéré dans un état de défaut. Dans ce deuxième cas, l'architecture de l'installation et le pilotage tels que décrits permettent d'isoler en toute sécurité la ligne de transport 4 comportant le défaut de court-circuit puisque les disjoncteurs de ligne 5a, 5b seront capables de s'ouvrir même si le groupe 2 de lignes de transport 4 est encore alimenté en courant par une seule station de conversion 6 puisque sa contribution à la circulation du courant sera inférieure au pouvoir de coupure des disjoncteurs de ligne.

De manière générale, un système de sécurité 7 en état de défaut ne doit pas continuer à être utilisé car il représente un risque pour l'installation. On considère qu'un système de sécurité 7 est en état de défaut lorsqu'un défaut de court-circuit a été détecté à son niveau et qu'il ne s'est pas ouvert, notamment malgré l'envoi d'une consigne d'ouverture à sa destination. En ce sens, il existe un besoin d'isoler la station de conversion 6 associée. Dès lors, le procédé peut comporter une étape de détection de la défaillance E7 du système de sécurité 7 en état de défaut, puis une étape de déconnexion E8 de la liaison électrique entre la station de conversion 6, associée audit système de sécurité 7 en état de défaut, et le groupe 2 de lignes de transport 4. Après l'étape de déconnexion E8, un message peut être envoyé à une unité de surveillance pour demander par exemple une inspection du système de sécurité 7 en état de défaut en vue de procéder à sa réparation. Par exemple, pour détecter la défaillance du système de sécurité 7, il peut être réalisé une surveillance du courant traversant le système de sécurité 7 (ledit système de sécurité 7 étant interposé entre la station de conversion 6 et le groupe 2), si ce courant surveillé correspond à un courant de défaut de court-circuit après que la consigne d'ouverture ait été envoyée au système de sécurité 7 et après un temps d'ouverture estimé au terme duquel ce dernier devrait être ouvert, alors ce dernier peut être considéré comme défaillant.

Notamment, comme illustré en figure 4, chaque système de sécurité 7 peut être associé à un module de protection 100 permettant par exemple de surveiller le courant via un élément de mesure de courant 101 et la tension via un élément de mesure de tension 102 au niveau dudit système de sécurité 7. C'est ce module de protection 100 qui va permettre de détecter le défaut de court-circuit grâce un relais 103 du module 100 prenant en entrées les données issues des éléments de mesure de courant 101 et de tension 102. Le relais 103 est alors configuré pour, lorsqu'il détecte un courant de court-circuit, envoyer le signal de commande d'ouverture en direction du système de sécurité 7 auquel il est associé. La figure 4 illustre le module de protection 100 pouvant être utilisé en association à un système de sécurité 7 de type disjoncteur placé entre la station de conversion 6 et le groupe 2 de lignes de transport 4, le module de protection 100 comporte le relais 103 relié à l'élément de mesure du courant 101 et/ou l'élément de mesure de la tension 102. Notamment, les informations de tension et de courant sont complémentaires, on peut mesurer un défaut à partir du courant seul, de la tension seule ou de la tension et du courant, ceci pouvant dépendre du type de défaut, par exemple si la résistance de défaut est nulle alors le courant de court-circuit seul peut suffire, si la résistance de défaut est très élevée (Rf>> ) alors la tension peut suffire. En outre, le module de protection 100 peut comporter un sectionneur 104 situé entre le système de sécurité 7 et le groupe 2 de lignes de transport, ce sectionneur 104 peut permettre de déconnecter la liaison électrique entre la station de conversion 6, associée audit système de sécurité 7 en état de défaut, et le groupe 2 de lignes de transport. L'ordre d'ouverture du sectionneur 104 peut venir du relais 103 qui surveille notamment le courant via l'élément de mesure de courant 101 après l'envoi de la consigne d'ouverture, et qui est configuré pour mettre en œuvre les étapes E7 et E8 évoquées précédemment. Les données issues des éléments de mesure 101 et 102 ainsi que les ordres d'ouverture du système de sécurité et du sectionneur 104 sont des données locales. Le relais 103 peut aussi communiquer avec l'extérieur grâce à l'utilisation de « données de communication », ces données de communication pouvant par exemple être une transmission d'un état de défaut constaté pour un système de sécurité. Le relais 103 peut aussi communiquer avec d'autres relais 103 associés à d'autres systèmes de sécurité à travers des moyens de communication par exemple une fibre optique. Ainsi, en fonction des applications, il est possible d'échanger des informations entre relais 103, par exemple pour remonter la transmission de l'état de défaut, des données mesurées ou calculées au niveau du module, etc. D'autres moyens de communication que la fibre optique peuvent être mis en œuvre, par exemple via un conducteur dédié ou via communication radio.

On comprend de ce qui a été dit ci-dessus qu'en cas d'occurrence d'un défaut de court-circuit, notamment de résistance $R_f$, sur une ligne de transport 4, ce défaut de court-circuit va se propager dans l'ensemble des lignes de transport du réseau et sera aussi vu par les systèmes de sécurité 7 reliés au groupe 2 de lignes de transport 4. Généralement, il résulte du défaut de court-circuit qu'il va drainer une quantité telle de courant sur la ligne de transport comportant le défaut que le courant traversant les disjoncteurs de ligne 5a, 5b de la ligne de transport 4 comportant le défaut va dépasser le pouvoir de coupure desdits disjoncteurs de ligne 5a, 5b qui ne vont pas pouvoir s'ouvrir. En ce sens, la fonction des systèmes de sécurité 7 est de supprimer la contribution des stations de conversion 6 pour permettre au courant traversant les disjoncteurs de ligne 5a, 5b de la ligne de transport 4 comportant le défaut de descendre en dessous d'un seuil qui permet auxdits disjoncteurs de ligne 5a, 5b de s'ouvrir pour isoler la ligne de transport 4 comportant le défaut. Concernant les disjoncteurs de ligne 5a, 5b, leur fonction est préférentiellement de ne s'ouvrir que si le défaut est situé entre deux disjoncteurs de ligne 5a, 5b d'une même ligne de transport 4.

On comprend de tout ce qui a été dit ci-dessus que les disjoncteurs de ligne 5a, 5b d'une même ligne de transport 4 présentent un fonctionnement tel que leur ouverture n'est pas immédiate ou instantanée en cas de détection du défaut de court-circuit à leurs niveaux car on va chercher préférentiellement à vérifier la présence du défaut entre eux avant de déclencher leurs ouvertures, par ailleurs avant leurs ouvertures il sera aussi vérifié que le courant les traversant est inférieur à un seuil prédéterminé : ainsi seuls les disjoncteurs de ligne 5a, 5b d'une même ligne entre lesquels le défaut de court-circuit a été localisé s'ouvrent, les autres restant à l'état fermé, cette stratégie permettant d'augmenter la rapidité de la restauration du réseau puisque les autres disjoncteurs de ligne n'ayant pas disjoncté seront déjà prêts pour la restauration.

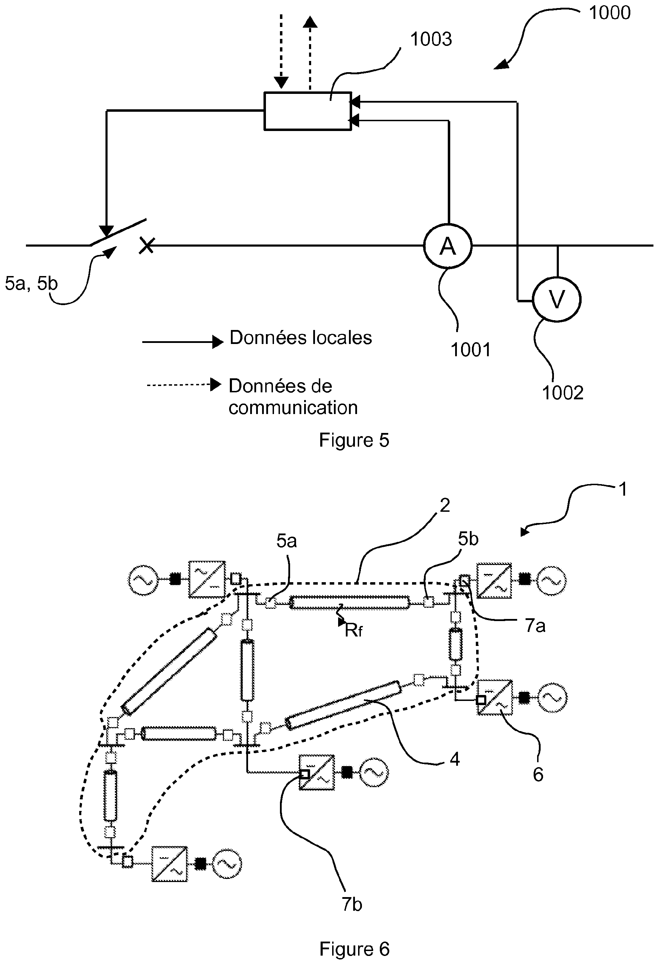

Plus particulièrement, le procédé comporte (figure 3) une étape de détection E9 du défaut de court-circuit, notamment de résistance $R_f$, au niveau de chaque disjoncteur de ligne 5a, 5b, et l'étape de recherche E2 comporte, pour chaque couple de disjoncteurs de ligne 5a, 5b d'une même ligne de transport 4 et après que le défaut de court-circuit ait été détecté au niveau des disjoncteurs de ligne 5a, 5b dudit couple, une étape de vérification E2-1 de la présence du défaut de court-circuit $R_f$ entre lesdits disjoncteurs de ligne 5a, 5b dudit couple. Ensuite, l'étape d'isolation E3 de la ligne de transport 4 en défaut est mise en œuvre seulement après constatation de la présence du défaut de court-circuit sur ladite ligne de transport 4 en défaut par l'étape de vérification E2-1 : il y a donc ici ouverture des disjoncteurs de ligne entre lesquels le défaut a été localisé. Comme évoqué, la détection d'un défaut de court-circuit au niveau d'un disjoncteur de ligne peut être mise en œuvre par mesure de grandeur(s) physique(s) à proximité du disjoncteur de ligne représentative du courant traversant le disjoncteur de ligne : il est ensuite aisé de savoir si le courant de court-circuit traverse le disjoncteur de ligne. Autrement dit, ceci peut être mis en œuvre en associant, par exemple, chaque disjoncteur de ligne 5a, 5b (figure 5) à un élément de protection 1000 permettant, par exemple, de surveiller le courant via un élément de mesure de courant 1001 et la tension via un élément de mesure de tension 1002 au niveau dudit disjoncteur de ligne 5a, 5b. C'est cet élément de protection 1000 qui va permettre de détecter le défaut de court-circuit par un relais 1003 de l'élément de protection 1000 prenant en entrées les données issues des éléments de mesure de courant 1001 et de tension 1002 (utilisation des « données locales »). Par ailleurs, les relais 1003 de deux éléments de protection 1000 associés aux disjoncteurs de ligne 5a, 5b d'une même ligne de transport peuvent dialoguer entre eux (utilisation des « données de communication ») pour comparer leurs données locales en vue de vérifier la présence du défaut de court-circuit entre eux. Par exemple, la présence de courant circulant dans le même sens en direction du défaut aux niveaux de deux disjoncteurs de ligne d'une même ligne de transport 4 peut être assimilée à la présence du défaut de court-circuit. Autrement dit, la présence de courant au niveau de deux disjoncteurs de ligne d'une même ligne de transport circulant vers l'intérieur de ladite ligne de transport peut être assimilée à la présence du défaut de court-circuit. Pour permettre la comparaison des données issues de deux éléments de protection associées aux disjoncteurs de ligne 5a, 5b, la ligne de transport 4 peut comporter un élément de communication comme par exemple une fibre optique reliant les relais 1003 des deux éléments de protection 1000 associé aux disjoncteurs de ligne 5a, 5b de ladite ligne de transport 4. Les données à comparer décrites ci-avant ne sont pas forcément des données de mesure, il peut par exemple s'agir de signaux binaires. Les relais 1003 peuvent alors échanger des informations au travers d'un moyen de communication comme une fibre optique. Selon une réalisation il est possible d'ajouter des inductances à chaque bout de ligne de transport et dans ce cas, à partir des mesures de tension le défaut peut être identifié : cependant cette solution fonctionne uniquement dans le cas où les lignes de transport sont des câbles et que la résistance du défaut est faible. La comparaison de données au niveau de deux disjoncteurs d'une même ligne pour en déduire la présence ou non d'un défaut de court-circuit entre lesdits deux disjoncteurs est une notion connue de l'homme du métier et ne sera pas décrite ici en détails. Lorsque la vérification de la présence du défaut de court-circuit $R_f$ entre les deux disjoncteurs de ligne 5a, 5b d'une même ligne de transport 4 est positive, les relais 1003 associés peuvent envoyer un signal de commande auxdits disjoncteurs de ligne 5a, 5b pour leur demander de s'ouvrir en particulier lorsque le courant les traversant est inférieur à leurs pouvoirs de coupure respectifs comme il le sera vu plus en détail par la suite, les relais 1003 sont donc configurés pour mettre en œuvre les étapes de recherche E2 et d'isolation E3 décrites précédemment. Les données locales visibles en figure 5 correspondent aux données mesurées par les éléments 1001 et 1002 et aux consignes envoyées au disjoncteur de ligne 5a, 5b associé.

Comme on l'a évoqué précédemment, les disjoncteurs de ligne 5a, 5b présentent un pouvoir de coupure. Par ailleurs, un disjoncteur, notamment de ligne, est capable de s'ouvrir alors que du courant le traverse encore et lorsque ce courant est inférieur à un seuil de référence correspondant au pouvoir de coupure dudit disjoncteur. En ce sens, l'étape d'isolation E3 de la ligne de transport 4 en défaut comporte préférentiellement une étape de surveillance E3-1 d'au moins une caractéristique physique au niveau de chacun des deux disjoncteurs de ligne 5a, 5b de ladite ligne de transport en défaut, chacun desdits deux disjoncteurs de ligne 5a, 5b s'ouvrant, notamment indépendamment l'un de l'autre, dès que la caractéristique surveillée à son niveau se situe en dessous d'un seuil de référence. Bien entendu l'étape de surveillance et l'ouverture ne sont réalisées que pour les disjoncteurs de ligne 5a, 5b d'une même ligne après identification de la présence du défaut de court-circuit entre eux. La caractéristique surveillée peut être le courant traversant le disjoncteur de ligne 5a, 5b et le seuil de référence peut être un seuil de courant lié au pouvoir de coupure dudit disjoncteur. Typiquement, en cas d'utilisation de disjoncteurs de ligne 5a, 5b de type mécanique, le seuil de référence est de 20kA d'où il résulte que le disjoncteur de ligne peut recevoir une consigne d'ouverture dès que le courant le traversant devient inférieur à 20kA. En ce sens, si jamais le défaut de court-circuit, notamment de résistance $R_f$, provoque une montée de courant supérieur au seuil de référence, l'ouverture de N-1 des systèmes de sécurité 7 va permettre d'induire une baisse du courant au niveau des disjoncteurs de lignes 5a, 5b appartenant à la ligne de transport 4 comportant le défaut de court-circuit : on va ainsi pouvoir isoler la ligne de transport 4 en défaut dès que possible, et notamment lorsque du courant traverse encore les disjoncteurs de lignes de la ligne de transport 4 en défaut. La restauration de la circulation du courant dans le groupe 2 de lignes de transport 4, dans lequel la ligne de transport où est situé le défaut est isolée électriquement des autres lignes du groupe 2, sera d'autant plus rapide que la ligne de transport où le défaut de court-circuit est identifié est isolée rapidement des autres lignes du transport du groupe 2. On comprend alors que, préférentiellement, l'étape d'isolation E3 est telle que l'ouverture d'au moins l'un des deux, et notamment des deux, disjoncteurs de ligne 5a, 5b est mise en œuvre alors que du courant le/les traverse encore.

Il a été évoqué précédemment que le système de sécurité 7 pouvait être intégré ou non à la station de conversion 6. Dans l'exemple illustré en figure 1, les systèmes de sécurité 7 sont tous distincts des stations de conversion 6, et sont notamment formés par des disjoncteurs mécaniques, de préférence identiques à ceux des disjoncteurs de ligne 5a, 5b. Alternativement, la figure 6 illustre une installation comportant des systèmes de sécurité 7a distincts des stations de conversion et des systèmes de sécurité 7b intégrés aux stations de conversion 6. Les systèmes de sécurité 7a sont des disjoncteurs, de préférence identiques à ceux des disjoncteurs de ligne 5a, 5b, et les systèmes de sécurité 7b sont une fonction de la station de conversion qui présente alors un pouvoir de coupure. Une station de conversion 6 à pouvoir de coupure connue peut être un convertisseur modulaire multi-niveau en pont H ou en pont complet aussi connu sous la dénomination anglaise « MMC full-bridge ». Lorsque la station de conversion 6 ne possède pas de pouvoir de coupure intégré, il peut s'agir d'un convertisseur modulaire multiniveau en demi-pont aussi connu sous la dénomination anglaise « MMC Half-bridge ». Selon encore une autre alternative (non représentée), les N systèmes de sécurité 7 peuvent être intégrés à des stations de conversion correspondantes. Autrement dit, chaque système de sécurité 7 peut être choisi parmi : un système de sécurité 7 intégré à la station de conversion 6 et un disjoncteur indépendant agencé sur un lien électrique reliant la station de conversion 6, associée audit système de sécurité 7, audit groupe 2 de lignes de transport 4.

On comprend de ce qui a été dit précédemment que l'invention est aussi relative à une installation pour le transport d'électricité au sein de laquelle chaque système de sécurité 7 est apte à, c'est-à-dire configuré pour, interrompre un courant continu correspondant à la contribution maximale en courant de court-circuit de la station de conversion 6 associée audit système de sécurité 7, et les disjoncteurs de ligne 5a, 5b présentent chacun un pouvoir de coupure apte à, c'est-à-dire configuré pour, interrompre un courant continu correspondant à la plus élevée des contributions maximales en courant de court-circuit des stations de conversion 6. L'installation est configurée pour envoyer un signal d'ouverture à chaque système de sécurité 7 lorsqu'un défaut de court-circuit issu du groupe 2 de lignes de transport 4 (notamment localisé sur une ligne de transport 4 du groupe 2 entre deux disjoncteurs de ligne 5a, 5b de ladite ligne de transport 4) est détecté au niveau dudit système de sécurité 7. Pour finir, pour chaque couple de disjoncteurs de ligne 5a, 5b, l'installation est configurée pour envoyer un signal d'ouverture aux disjoncteurs de ligne 5a, 5b dudit couple lorsque le défaut de court-circuit est détecté au niveau des disjoncteurs de ligne 5a, 5b dudit couple et que ledit défaut de court-circuit est localisé entre les disjoncteurs de ligne 5a, 5b dudit couple. On comprend que l'installation peut comporter les éléments logiciels et matériels de mise en œuvre du procédé tel que décrit précédemment.

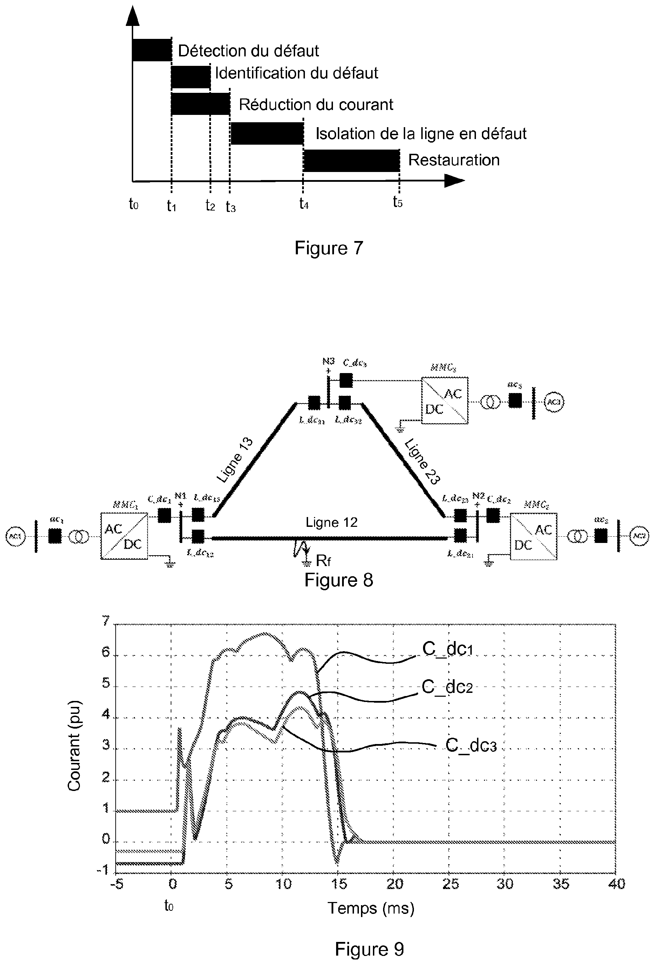

La figure 7 illustre un diagramme temporel lié aux stratégies de pilotage de l'installation dans les premier et deuxième cas décrits ci-avant. A $t_0$, le défaut de court-circuit a lieu sur une ligne de transport du groupe 2 de lignes du réseau 3. Entre $t_0$ et $t_1$, le défaut est détecté au niveau des systèmes de sécurité 7 et des disjoncteurs de ligne 5a, 5b notamment par les modules de protection et les éléments de protection qui leurs sont associés. Entre $t_1$ et $t_2$, les éléments de protection 1000 de ligne assurent leur fonction de recherche et d'identification de la ligne de transport comportant le défaut de court-circuit. Concomitamment, entre $t_1$ et $t_3$ les systèmes de sécurité 7 s'ouvrent (au moins N-1 d'entre eux), enclenchant ainsi une réduction du courant de court-circuit circulant dans le groupe 2 de lignes du réseau 3. Ici, on considère qu'avant $t_3$, le courant est trop élevé pour permettre l'isolation de ladite ligne de transport comportant le défaut de court-circuit. Entre $t_3$ et $t_4$, la ligne de transport 4 en défaut est isolée du reste des lignes du groupe 2 de lignes, et à la fin de cette isolation, entre $t_4$ et $t_5$, la puissance est restaurée dans le réseau 3. On comprend de ce diagramme temporel que la mise en œuvre des étapes du procédé va dépendre du temps de propagation du défaut de court-circuit et du temps de réaction des composants de l'installation. En ce sens, l'étape de restauration E4 peut être déclenchée en fonction d'un temps de référence pour lequel on considère que l'installation s'est stabilisée en isolant la ligne de transport en défaut. Typiquement, l'étape de restauration E4 comporte, pour chaque système de sécurité 7, une étape de surveillance du temps passé depuis l'ouverture dudit système de sécurité 7 avec un seuil temporel, et lorsque le seuil temporel est atteint, une consigne de fermeture est envoyée au système de sécurité 7 qui se ferme de sorte à autoriser à nouveau la station de conversion 6 associée à participer à la circulation du courant au sein du groupe 2 de lignes de transport 4. Cette étape de surveillance du temps passé peut être mise en œuvre par le relai 103 du module de protection 100 associé audit système de sécurité 7 qui déclenche un chronomètre lorsqu'il envoi la consigne d'ouverture au système de sécurité 7 correspondant. Lorsque ce chronomètre atteint la valeur du seuil temporel, le relai 103 envoi automatiquement une consigne de fermeture au système de sécurité 7 associé. Alternativement, une surveillance globale à plus grande échelle peut être mise en œuvre dans le sens ou les envois de consigne sont réalisés après constatation effective du bon fonctionnement des séquences précédentes, ceci impliquant par exemple des vérifications locales des états des systèmes de sécurité.

Dans la présente description, un groupe 2 de lignes de transport 4 peut constituer un pôle électrique en particulier, par exemple un pôle positif ou un pôle négatif. On comprend donc que l'installation peut comporter plusieurs groupes de lignes, chaque groupe de ligne est associé à un pôle et forme un ensemble en association avec N stations de conversion correspondantes chacune associée à un système de sécurité correspondant. Dans le domaine, les différents groupes de lignes de transport forment un tout appelé réseau de transport en courant continu. Le procédé décrit ci-avant peut être mis en œuvre pour chaque pôle électrique : autrement dit, tout ce qui a été dit précédemment dans la présente description est relatif à un groupe de lignes de transport mais peut s'appliquer de manière plus générale à différents groupes de lignes de transport d'une installation.

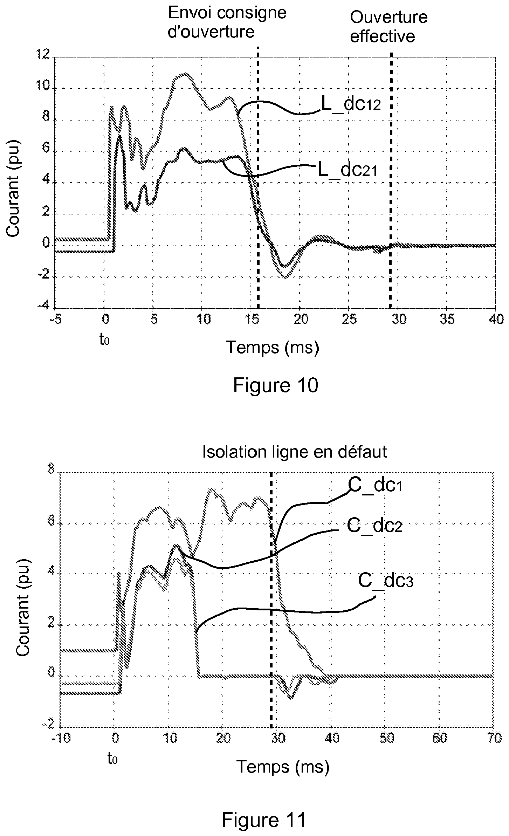

Il va être décrit ci-après après un exemple particulier de séquence de protection en relation avec la stratégie proposée dans le cadre du présent procédé pour une installation illustrée en figure 8 d'un groupe de lignes de transport comportant trois lignes de transport chaque ligne de transport étant dans l'exemple formée par un câble « Ligne 13 ; Ligne 12 ; Ligne 23 » de type Delta à trois terminaux « N1 ; N2 ; N3 ». Le groupe de lignes est ici un groupe de lignes associées à un pôle positif. Chaque terminal « N1 ; N2 ; N3 » est relié à une station de conversion « $MMC_1$ ; $MMC_2$ ; $MMC_3$ » de courant alternatif en courant continu par l'intermédiaire d'un système de sécurité « $C\_dc_1$ ; $C\_dc_2$ ; $C\_dc_3$ » de type disjoncteur. La ligne de transport « Ligne 12 » comporte les disjoncteurs de ligne « L_dc12 ; L_dc21 », la ligne de transport « Ligne 13 » comporte les disjoncteurs de ligne « L_dc13 ; L_dc31 », la ligne de transport « Ligne 23 » comporte les disjoncteurs de ligne « L_dc32 ; L_dc23 ». Sur cette figure 8, les références AC1, AC2, AC3 représentent des sources de courant alternatifs et les références $ac_1$, $ac_2$, $ac_3$ représentent des disjoncteurs à courant alternatif. À $t_0$=0 un défaut de basse impédance ($R_f$ =$10m\Omega$) de type court-circuit est appliqué à la ligne de transport référencée « Ligne 12 » entre les disjoncteurs de ligne L_dc12 et L_dc21. Le courant de défaut associé au défaut de court-circuit se propage dans le réseau le long des lignes de transport et arrive au niveau du côté continu des stations de conversion « $MMC_1$ ; $MMC_2$ ; $MMC_3$ ». Lorsque le défaut est détecté par les modules de protection (non représentés) associés aux disjoncteurs référencés « $C\_dc_1$, $C\_dc_2$, $C\_dc_3$ », ces disjoncteurs s'ouvrent après réception d'une consigne adaptée. La figure 9 illustre justement l'évolution du courant en pu, avec pu acronyme de « per unit » correspondant à la valeur du courant divisée par le courant nominal, en fonction du temps traversant chacun des systèmes de sécurité « $C\_dc_1$, $C\_dc_2$, $C\_dc_3$ », on voit qu'après 15ms les stations de conversion « $MMC_1$ ; $MMC_2$ ; $MMC_3$ » ne contribuent plus à la circulation de courant au sein du groupe de lignes de transport 2 : les systèmes de sécurité « $C\_dc_1$ ; $C\_dc_2$ ; $C\_dc_3$ » sont donc ouverts, ce qui correspond au premier cas évoqué précédemment. En parallèle, les éléments de protection (non représentés) associés aux disjoncteurs de ligne « L_dc12 ; L_dc21 ; L_dc13 ; L_dc31 ; L_dc32 ; L_dc23 » détectent le défaut et initient un processus de recherche de la ligne de transport en défaut. Au moment où le processus est lancé, le courant circulant dans les lignes de transport peut excéder le pouvoir de coupure des disjoncteurs de ligne à cause d'une augmentation des contributions liées à la décharge des lignes de transport adjacentes à celle en défaut et aux contributions des stations de conversion. Lorsque la ligne de transport en défaut est trouvée, c'est à dire que les éléments de protection des disjoncteurs de ligne (ici L_dc12 et L_dc21) d'une même ligne ont la connaissance de la présence du défaut entre les disjoncteurs de ligne, le courant traversant ces disjoncteurs de ligne est surveillé de sorte que la consigne d'ouverture desdits disjoncteurs de ligne soit envoyée dès que le courant les traversant devient inférieur au courant associé à leur pouvoir de coupure comme l'illustre la figure 10 (pouvoir de coupure ici associé à 2 pu) donnant le courant (en pu) traversant les deux disjoncteurs de ligne L_dc12 et L_dc21 en fonction du temps : peu après 15ms la consigne de leur ouverture est envoyée et l'isolation du défaut est réalisée (« ouverture effective » sur la figure 10) un peu avant 30ms depuis $t_0$. Ainsi, la restauration de la circulation du courant dans le groupe de lignes de transport moins la ligne de transport isolée peut être mise en œuvre par fermeture des systèmes de sécurité « $C\_dc_1$, $C\_dc_2$, $C\_dc_3$ » après 30ms dans ce cas précis. Dans cet exemple, il n'y a eu aucune défaillance d'un système de sécurité.

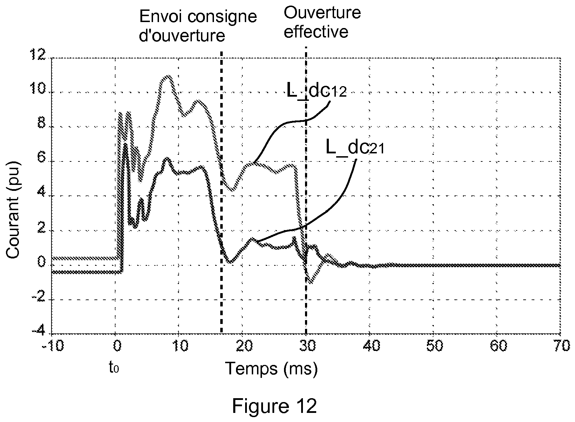

Dans une variante correspondant au deuxième cas, on considère à présent que le système de sécurité $C\_dc_1$ est défaillant et ne s'ouvre pas même après la détection du défaut de court-circuit à son niveau. Ainsi, les systèmes de sécurité $C\_dc_2$ et $C\_dc_3$ s'ouvrent de manière conventionnelle d'où il résulte que seul le système $C\_dc_1$ continue à alimenter le groupe de lignes de transport via la source AC1. La figure 11 illustre justement l'évolution du courant en pu en fonction du temps au niveau des différents systèmes de sécurité $C\_dc_1$, $C\_dc_2$ et $C\_dc_3$ : on voit que l'isolation de la ligne de transport comportant le défaut de court-circuit vers 30ms permet d'annuler le courant de défaut issu de la source de courant alternatif AC1 (figure 8). La figure 12 illustre l'évolution du courant (en pu) traversant les disjoncteurs de ligne L_dc12 et L_dc21 au cours de cette variante, entre 10ms et 20ms la consigne d'ouverture est envoyée aux disjoncteurs de ligne L_dc12 et L_dc21 dont l'ouverture effective est à 30ms figure 12, l'ouverture effective à 30ms induisant une chute du courant de la station $MMC_1$ entre 30ms et 40ms (figure 11). En comparant cette variante avec le cas où tous les systèmes de sécurité fonctionnent et s'ouvrent, le temps supplémentaire est de l'ordre de 10ms, ce qui est acceptable dans l'application souhaitée.

Selon l'exemple particulier et sa variante en combinaison avec la figure 7, les durées attendues de mise en œuvre des étapes du procédé sont généralement les suivantes :

- De $t_0$ à $t_1$ la durée attendue entre 0,2ms et 2ms pour que le défaut soit détecté au niveau de tous les systèmes de sécurité et de tous les disjoncteurs de ligne,
- De $t_1$ à $t_2$ la durée attendue est de 1 ms à 10ms pour que la ligne en défaut soit identifiée,
- De $t_1$ à $t_3$ la durée attendue est de 15ms à 20ms pour que le courant au niveau des disjoncteurs de ligne de la ligne de transport en défaut passe en dessous du seuil permettant leurs ouvertures,
- De $t_3$ à $t_4$ la durée attendue est de 15ms à 20ms le temps que l'isolation de la ligne en défaut soit effective
- De t4 à t5 la durée attendue pour restaurer la puissance dans le réseau est comprise entre 75ms et 125ms.

Au total, entre l'occurrence du défaut et la restauration du réseau il faut compter entre 105,2ms et 167ms, ces temps étant considérés comme convenables pour une restauration du réseau.

De préférence, les systèmes de sécurité 7 et les disjoncteurs de ligne 5a, 5b présentent tous un pouvoir de coupure identique et peuvent tous être des disjoncteurs mécaniques, notamment dont le pouvoir de coupure est égal à 20kA.

Lorsque les systèmes de sécurité 7 et/ou les disjoncteurs de lignes 5a, 5b doivent passer d'un état ouvert à un état fermé, ceci peut être mis en œuvre en utilisant des résistances d'insertion aussi connues sous la dénomination anglaise PIR pour « Pre-insertion résistances ».

La présente invention comporte de multiples avantages évoqués précédemment et notamment parmi lesquels :

- la capacité des disjoncteurs de ligne de s'ouvrir alors que du courant les traversent encore permet d'accélérer la séquence d'isolation de la ligne de transport en défaut sans avoir à attendre que le courant circulant dans le groupe de lignes soit nul,
- en cas de défaillance de l'un des systèmes de sécurité, l'installation reste robuste puisque les disjoncteurs de ligne seront toujours capables d'isoler la ligne de transport en défaut du groupe de ligne sans avoir à attendre une ouverture de disjoncteurs du côté courant alternatif, ce qui aurait pour conséquence d'augmenter le temps avant restauration de la puissance à un niveau non acceptable,
- l'utilisation de disjoncteurs mécaniques pour les disjoncteurs de ligne et les systèmes de sécurité présente l'avantage d'utiliser des technologies peu chères tout en conservant une robustesse de l'installation vis à vis d'un défaut de court-circuit,
- la stratégie proposée permet d'éviter de relier les disjoncteurs de lignes à des dispositifs de limitation de courant comme des inductances reliées en séries des disjoncteurs de ligne ou à d'autres types de limiteurs de courant comme par exemple les limiteurs supraconducteurs,
- l'utilisation de disjoncteurs de ligne permet si on le souhaite d'ajouter une fonction à l'installation, par exemple cela permet d'utiliser lesdits disjoncteurs de ligne comme des interrupteurs lorsque le gestionnaire du réseau le souhaite, afin d'isoler une ligne de transport en condition normale de fonctionnement de l'installation, c'est-à-dire même lorsqu'aucun défaut de court-circuit n'est pas présent dans le groupe de ligne, ceci permettant de reconfigurer le réseau au cours de son fonctionnement normal,
- par ailleurs, les disjoncteurs de ligne peuvent être commandés à l'ouverture même dans le cas d'un défaut avec une résistance de défaut Rf élevée pour lequel le contribution au courant de défaut de convertisseur est en dessous de la limite de détection de défaut par les système de sécurité 7 et le courant de de court-circuit de ligne est en dessous du pouvoir de coupure des disjoncteurs de ligne.

**Revendications**

1. Procédé de pilotage d'une installation (1) pour le transport d'électricité comprenant un réseau de transport (3) à courant continu comportant un groupe (2) de lignes de transport (4) d'électricité reliées entre elles, chaque ligne de transport (4) comportant un couple de deux disjoncteurs de ligne (5a, 5b) agencés aux extrémités opposées de ladite ligne de transport (4), ladite installation comportant un nombre N de stations de conversion (6) de courant alternatif en courant continu chacune associée à un système de sécurité (7), chaque station de conversion (6) étant reliée au groupe (2) de lignes de transport (4) et étant associée à une contribution maximale en courant de court-circuit,

   **caractérisé en ce que** chaque système de sécurité (7) est apte à interrompre un courant continu correspondant à la contribution maximale en courant de court-circuit de la station de conversion (6) associée, les disjoncteurs de ligne (5a, 5b) présentant chacun un pouvoir de coupure apte à interrompre un courant continu correspondant à la plus élevée des contributions maximales en courant de court-circuit des stations de conversion (6), et **en ce que** le procédé comporte, consécutivement à une occurrence d'un défaut de court-circuit sur une des lignes de transport (4), les étapes suivantes :

   • une étape d'ouverture (E1) d'au moins N-1 des systèmes de sécurité (7) d'où il résulte que, pour chaque système de sécurité (7) s'ouvrant, la contribution à la circulation du courant dans le groupe (2) de lignes de transport (4) issue de la station de conversion (6) associée audit système de sécurité (7) s'ouvrant est supprimée,
   • une étape de recherche (E2) du défaut de court-circuit pour identifier la ligne de transport (4) en défaut,
   • une étape d'isolation (E3), mise en œuvre après identification de la ligne de transport (4) en défaut par l'étape de recherche (E2), de la ligne de transport (4) en défaut par ouverture des disjoncteurs de ligne

(5a, 5b) de ladite ligne de transport (4) en défaut.

**2.** Procédé selon la revendication précédente, **caractérisé en ce qu'**il comporte une étape de détection (E5) du défaut de court-circuit au niveau de chaque système de sécurité (7) déclenchant, pour chaque système de sécurité (7) et après que le défaut de court-circuit ait été détecté au niveau dudit système de sécurité (7), une étape d'émission (E6) d'un signal de commande d'ouverture en direction dudit système de sécurité (7).

**3.** Procédé selon l'une quelconque des revendications précédentes, **caractérisé en ce qu'**il comporte une étape de détection (E9) du défaut de court-circuit au niveau de chaque disjoncteur de ligne (5a, 5b), et **en ce que** l'étape de recherche (E2) comporte, pour chaque couple de disjoncteurs de ligne (5a, 5b) d'une même ligne de transport (4) et après que le défaut de court-circuit ait été détecté au niveau des disjoncteurs de ligne (5a, 5b) dudit couple :

• une étape de vérification (E2-1) de la présence du défaut de court-circuit entre lesdits disjoncteurs de ligne (5a, 5b) dudit couple,

l'étape d'isolation (E3) de la ligne de transport (4) en défaut étant mise en œuvre seulement après constatation de la présence du défaut de court-circuit sur ladite ligne de transport (4) en défaut par l'étape de vérification (E2-1).

**4.** Procédé selon l'une quelconque des revendications précédentes, **caractérisé en ce que** l'étape d'isolation (E3) de la ligne de transport (4) en défaut comporte une étape de surveillance (E3-1) d'au moins une caractéristique physique au niveau de chacun des deux disjoncteurs de ligne (5a, 5b) de ladite ligne de transport (4) en défaut, chacun desdits deux disjoncteurs de ligne (5a, 5b) s'ouvrant, notamment indépendamment l'un de l'autre, dès que la caractéristique surveillée à son niveau se situe en dessous d'un seuil de référence.

**5.** Procédé selon l'une quelconque des revendications précédentes, **caractérisé en ce que** seulement N-1 des systèmes de sécurité (7) s'ouvre(nt) consécutivement à l'occurrence du défaut de court-circuit, le système de sécurité (7) restant fermé étant considéré dans un état de défaut.

**6.** Procédé selon la revendication précédente, **caractérisé en ce qu'**il comporte une étape de détection de la défaillance (E7) du système de sécurité (7) en état de défaut, puis une étape de déconnexion (E8) de la liaison électrique entre la station de conversion (6), associée audit système de sécurité (7) en état de défaut, et le groupe (2) de lignes de transport (4).

**7.** Procédé selon l'une quelconque des revendications précédentes, **caractérisé en ce que** l'étape d'isolation (E3) est telle que l'ouverture d'au moins l'un des deux disjoncteurs de ligne (5a, 5b) est mise en œuvre alors que du courant le traverse encore.

**8.** Procédé selon l'une quelconque des revendications précédentes, **caractérisé en ce que** chaque système de sécurité (7) est choisi parmi : un système de sécurité (7) intégré à la station de conversion (6) et un disjoncteur indépendant agencé sur un lien électrique reliant la station de conversion (6), associée audit système de sécurité (7), audit groupe (2) de lignes de transport (4).

**9.** Procédé selon l'une quelconque des revendications précédentes, **caractérisé en ce qu'**il comporte une étape de restauration (E4) du réseau mise en œuvre après l'étape d'isolation (E3) de la ligne de transport (4) en défaut, ladite étape de restauration (E4) comportant la fermeture de chaque système de sécurité (7) s'étant ouvert au cours de l'étape d'ouverture (E1), notamment au cours et consécutivement à l'étape de restauration (E4) les disjoncteurs de ligne (5a, 5b) de ladite ligne de transport (4) en défaut restent ouverts de sorte que le défaut de court-circuit de ladite ligne de transport (4) en défaut soit isolé électriquement des autres lignes de transport (4) du groupe (2).

**10.** Installation pour le transport d'électricité comprenant :

• un réseau de transport (3) à courant continu comportant un groupe (2) de lignes de transport (4) d'électricité reliées entre elles, chaque ligne de transport (4) comportant un couple de deux disjoncteurs de ligne (5a, 5b) agencés aux extrémités opposées de ladite ligne de transport (4),
• un nombre N de stations de conversion (6) de courant alternatif en courant continu chacune associée à un système de sécurité (7), chaque station de conversion (6) étant reliée au groupe (2) de lignes de transport (4) et étant associée à une contribution maximale en courant de court-circuit,

**caractérisée en ce que** :

• chaque système de sécurité (7) est apte à interrompre un courant continu correspondant à la contribution maximale en courant de court-circuit de la station de conversion (6) associée,
• les disjoncteurs de ligne (5a, 5b) présentent chacun un pouvoir de coupure apte à interrompre un courant continu correspondant à la plus élevée des contributions maximales en courant de court-circuit des stations de conversion (6),
• l'installation est configurée pour envoyer un signal d'ouverture à chaque système de sécurité (7) lorsqu'un défaut de court-circuit issu du groupe (2) de lignes de transport (4) est détecté au niveau dudit système de sécurité (7),
• pour chaque couple de disjoncteurs de ligne (5a, 5b), l'installation est configurée pour envoyer un signal d'ouverture aux disjoncteurs de ligne (5a, 5b) dudit couple lorsque le défaut de court-circuit est détecté au niveau des disjoncteurs de ligne (5a, 5b) dudit couple et que ledit défaut de court-circuit est localisé entre les disjoncteurs de ligne (5a, 5b) dudit couple.

11. Installation selon la revendication précédente, **caractérisée en ce qu'**elle comporte les éléments logiciels et matériels de mise en œuvre du procédé selon l'une quelconque des revendications 1 à 9.


**Patentansprüche**

1. Verfahren zur Steuerung einer Anlage (1) zur Übertragung von Strom, die ein Gleichstromübertragungsnetz (3) mit einer Gruppe (2) von miteinander verbundenen Stromübertragungsleitungen (4) umfasst, wobei jede Übertragungsleitung (4) ein Paar Leitungsschutzschalter (5a, 5b) umfasst, die an den gegenüberliegenden Enden der Übertragungsleitung (4) angeordnet sind, wobei die Anlage eine Anzahl N von Stationen (6) zum Umwandeln von Wechselstrom in Gleichstrom umfasst, die jeweils mit einem Sicherheitssystem (7) verbunden sind, wobei jede Wandlerstation (6) mit der Gruppe (2) von Übertragungsleitungen (4) verbunden und mit einem maximalen Kurzschlussstrombeitrag verknüpft ist,

   **dadurch gekennzeichnet, dass** jedes Sicherheitssystem (7) in der Lage ist, einen Gleichstrom zu unterbrechen, der dem maximalen Kurzschlussstrombeitrag der zugehörigen Wandlerstation (6) entspricht, wobei die Leitungsschutzschalter (5a, 5b) jeweils ein Schaltvermögen haben, das in der Lage ist, einen Gleichstrom zu unterbrechen, der dem höchsten der maximalen Kurzschlussstrombeiträge der Wandlerstationen (6) entspricht, und dadurch, dass das Verfahren nach dem Auftreten eines Kurzschlussfehlers an einer der Übertragungsleitungen (4) die folgenden Schritte umfasst:

   • einen Schritt des Öffnens (E1) von mindestens N-1 Sicherheitssystemen (7), was zur Folge hat, dass bei jedem sich öffnenden Sicherheitssystem (7) der Beitrag zum Stromfluss in der Gruppe (2) der Übertragungsleitungen (4) der Wandlerstation (6), die zu dem sich öffnenden Sicherheitssystem (7) gehört, aufgehoben wird,
   • einen Schritt der Suche (E2) des Kurzschlussfehlers, um die fehlerhafte Übertragungsleitung (4) zu ermitteln,
   • einen nach der im Suchschritt (E2) erfolgten Ermittlung der fehlerhaften Übertragungsleitung (4) durchgeführten Schritt der Isolierung (E3) der fehlerhaften Übertragungsleitung (4) durch Öffnen der Leitungsschutzschalter (5a, 5b) der fehlerhaften Übertragungsleitung (4).

2. Verfahren nach dem vorhergehenden Anspruch, **dadurch gekennzeichnet, dass** es einen Schritt der Erfassung (E5) des Kurzschlussfehlers in jedem Sicherheitssystem (7) umfasst, der in jedem Sicherheitssystem (7) nach der Erfassung des Kurzschlussfehlers im jeweiligen Sicherheitssystem (7) einen Schritt des Sendens (E6) eines Öffnungssteuersignals in Richtung des Sicherheitssystems (7) auslöst.

3. Verfahren nach einem der vorhergehenden Ansprüche, **dadurch gekennzeichnet, dass** es einen Schritt (E9) der Erfassung des Kurzschlussfehlers bei jedem Leitungsschutzschalter (5a, 5b) umfasst, und darin, dass der Suchschritt (E2) bei jedem Leitungsschutzschalterpaar (5a, 5b) ein und derselben Übertragungsleitung (4) nach Erfassung des Kurzschlussfehlers an den Leitungsschutzschaltern (5a, 5b) des Paares:

   • einen Schritt der Überprüfung (E2-1) des Vorhandenseins des Kurzschlussfehlers zwischen den Leitungsschutzschaltern (5a, 5b) des Paars umfasst,

wobei der Schritt der Isolierung (E3) der fehlerhaften Übertragungsleitung (4) erst dann durchgeführt wird, nachdem im Überprüfungsschritt (E2-1) das Vorhandensein des Kurzschlussfehlers an der fehlerhaften Übertragungsleitung (4) festgestellt wurde.

4. Verfahren nach einem der vorhergehenden Ansprüche, **dadurch gekennzeichnet, dass** der Schritt der Isolierung (E3) der fehlerhaften Übertragungsleitung (4) einen Schritt der Überwachung (E3-1) mindestens eines physikalischen Merkmals jedes der beiden Leitungsschutzschalter (5a, 5b) der fehlerhaften Übertragungsleitung (4) umfasst, wobei sich jeder der beiden Leitungsschutzschalter (5a, 5b) unabhängig vom anderen öffnet, sobald das überwachte Merkmal unter einem Bezugsgrenzwert liegt.

5. Verfahren nach einem der vorhergehenden Ansprüche, **dadurch gekennzeichnet, dass** sich nur N-1 Sicherheitssysteme (7) nach dem Auftreten des Kurzschlussfehlers öffnen, wobei man davon ausgeht, dass sich das Sicherheitssystem (7) im Fehlerzustand befindet, das geschlossen bleibt.

6. Verfahren nach dem vorhergehenden Anspruch, **dadurch gekennzeichnet, dass** es einen Schritt der Erfassung der Störung (E7) des im Fehlerzustand befindlichen Sicherheitssystems (7) und dann einen Schritt der Unterbrechung (E8) der elektrischen Verbindung zwischen der Wandlerstation (6), die mit dem im Fehlerzustand befindlichen Sicherheitssystem (7) verbunden ist, und der Gruppe (2) von Übertragungsleitungen (4) umfasst.

7. Verfahren nach einem der vorhergehenden Ansprüche, **dadurch gekennzeichnet, dass** im Isolierungsschritt (E3) mindestens einer der beiden Leitungsschutzschalter (5a, 5b) geöffnet wird, während der Strom noch hindurch fließt.

8. Verfahren nach einem der vorhergehenden Ansprüche, **dadurch gekennzeichnet, dass** jedes Sicherheitssystem (7) ausgewählt wird aus: einem in die Wandlerstation (6) integrierten Sicherheitssystem (7) und einem unabhängigen Leistungsschalter, der auf einer elektrischen Verbindung angeordnet ist, die die mit dem genannten Sicherheitssystem (7) verbundene Wandlerstation (6) mit der genannten Gruppe (2) von Übertragungsleitungen (4) verbindet.

9. Verfahren nach einem der vorhergehenden Ansprüche, **dadurch gekennzeichnet, dass** es einen Schritt der Netzwiederherstellung (E4) umfasst, der nach dem Schritt der Isolierung (E3) der fehlerhaften Übertragungsleitung (4) durchgeführt wird, wobei der Schritt der Wiederherstellung (E4) das Schließen jedes Sicherheitssystems (7) umfasst, das sich im Öffnungsschritt (E1) geöffnet hat, wobei insbesondere die Leitungsschutzschalter (5a, 5b) der fehlerhaften Übertragungsleitung (4) während und nach dem Schritt der Wiederherstellung (E4) geöffnet bleiben, so dass der Kurzschlussfehler der fehlerhaften Übertragungsleitung (4) von den anderen Übertragungsleitungen (4) der Gruppe (2) elektrisch isoliert ist.

10. Anlage zur Übertragung von Strom, die folgendes umfasst:

   • ein Gleichstromübertragungsnetz (3), das eine Gruppe (2) miteinander verbundener Stromübertragungsleitungen (4) umfasst, wobei jede Übertragungsleitung (4) ein Paar Leitungsschutzschalter (5a, 5b) umfasst, die an den einander gegenüberliegenden Enden der Übertragungsleitung (4) angeordnet sind,
   • eine Anzahl N von Stationen zum Umwandeln von Wechselstrom in Gleichstrom (6), die jeweils mit einem Sicherheitssystem (7) verbunden sind, wobei jede Wandlerstation (6) mit der Gruppe (2) von Übertragungsleitungen (4) verbunden ist und mit einem maximalen Kurzschlussstrombeitrag verknüpft ist,

**dadurch gekennzeichnet, dass**:

   • jedes Sicherheitssystem (7) in der Lage ist, einen Gleichstrom zu unterbrechen, der dem maximalen Kurzschlussstrombeitrag der zugehörigen Wandlerstation (6) entspricht,
   • die Leitungsschutzschalter (5a, 5b) jeweils ein Ausschaltvermögen haben, das einen Gleichstrom unterbrechen kann, der dem höchsten der maximalen Kurzschlussstrombeiträge der Stromrichterstationen (6) entspricht,
   • die Anlage so gestaltet ist, dass sie ein Öffnungssignal an jedes Sicherheitssystem (7) sendet, wenn ein von der Gruppe (2) von Übertragungsleitungen (4) ausgehender Kurzschlussfehler im Sicherheitssystem (7) erfasst wird,
   • für jedes Leitungsschutzschalterpaar (5a, 5b) die Anlage so gestaltet ist, dass ein Öffnungssignal an das Leitungsschutzschalterpaar (5a, 5b) des Paares gesendet wird, wenn der Kurzschlussfehler an dem Leitungsschutzschalterpaar (5a, 5b) erfasst wird und sich der Kurzschlussfehler zwischen den Leitungsschutzschaltern des Leitungsschutzschalterpaar (5a, 5b) befindet.

**11.** Anlage nach dem vorhergehenden Anspruch, **dadurch gekennzeichnet, dass** sie die Software- und Hardwareelemente zur Durchführung des Verfahrens nach einem der Ansprüche 1 bis 9 umfasst.

**Claims**

**1.** A method for controlling an installation (1) for transmitting electricity comprising a direct current transmission network (3) comprising a group (2) of electricity transmission lines (4) linked to one another, each transmission line (4) comprising a pair of two line circuit breakers (5a, 5b) arranged at the opposite ends of said transmission line (4), said installation comprising a number N of stations (6) for converting alternating current to direct current each associated with a safety system (7), each converter station (6) being linked to the group (2) of transmission lines (4) and being associated with a maximum contribution of short-circuit current,

characterized in that each safety system (7) is capable of interrupting a direct current corresponding to the maximum contribution of short-circuit current of the associated converter station (6), the line circuit breakers (5a, 5b) each having a breaking capacity capable of interrupting a direct current corresponding to the highest of the maximum contributions of short-circuit current of the converter stations (6),
and **in that** the method comprises, following an occurrence of a short-circuit fault on one of the transmission lines (4), the following steps:

• a step (E1) of opening at least N-1 safety systems (7) such that, for each safety system (7) that is opened, the contribution to the flow of current through the group (2) of transmission lines (4) originating from the converter station (6) associated with said safety system (7) that is opened is removed;
• a step (E2) of finding the short-circuit fault to identify the faulty transmission line (4);
• a step (E3), implemented after identification of the faulty transmission line (4) by the finding step (E2), of isolating the faulty transmission line (4) by opening the line circuit breakers (5a, 5b) of said faulty transmission line (4).

**2.** The method as claimed in the preceding claim, **characterized in that** it comprises a step (E5) of detecting the short-circuit fault on each safety system (7) triggering, for each safety system (7) and after the short-circuit fault has been detected on said safety system (7), a step (E6) of transmitting an opening command signal to said safety system (7).

**3.** The method as claimed in any of the preceding claims, **characterized in that** it comprises a step (E9) of detecting the short-circuit fault on each line circuit breaker (5a, 5b), and **in that** the finding step (E2) comprises, for each pair of line circuit breakers (5a, 5b) of the same transmission line (4) and after the short-circuit fault has been detected on the line circuit breakers (5a, 5b) of said pair:

• a step (E2-1) of checking for the presence of the short-circuit fault between said line circuit breakers (5a, 5b) of said pair,

the step (E3) of isolating the faulty transmission line (4) being implemented only after the presence of the short-circuit fault has been detected on said faulty transmission line (4) by the checking step (E2-1).

**4.** The method as claimed in any of the preceding claims, **characterized in that** the step (E3) of isolating the faulty transmission line (4) comprises a step (E3-1) of monitoring at least one physical feature on each of the two line circuit breakers (5a, 5b) of said faulty transmission line (4), each of said two line circuit breakers (5a, 5b) opening, in particular independently of one another, as soon as the feature monitored in the vicinity thereof is located below a reference threshold.

**5.** The method as claimed in any of the preceding claims, **characterized in that** only N-1 safety systems (7) open following the occurrence of the short-circuit fault, with the safety system (7) that remains closed being considered to be in a faulty state.

**6.** The method as claimed in the preceding claim, **characterized in that** it comprises a step (E7) of detecting the failure of the safety system (7) in a faulty state, then a step (E8) of disconnecting the electrical connection between the converter station (6), associated with said safety system (7) in the faulty state, and the group (2) of transmission lines (4).

7.  The method as claimed in any of the preceding claims, **characterized in that** the isolation step (E3) is such that opening at least one of the two line circuit breakers (5a, 5b) is implemented while current is still flowing therethrough.

8.  The method as claimed in any of the preceding claims, **characterized in that** each safety system (7) is selected from: a safety system (7) integrated in the converter station (6) and an independent circuit breaker arranged on an electrical link linking the converter station (6), associated with said safety system (7), with said group (2) of transmission lines (4).

9.  The method as claimed in any of the preceding claims, **characterized in that** it comprises a step (E4) of restoring the network that is implemented after the step (E3) of isolating the faulty transmission line (4), said restoration step (E4) comprising closing each safety system (7) that is opened during the opening step (E1), in particular during and following the restoration step (E4) the line circuit breakers (5a, 5b) of said faulty transmission line (4) remain open so that the short-circuit fault of said faulty transmission line (4) is electrically isolated from the other transmission lines (4) of the group (2).

10.  An installation for transmitting electricity comprising:

   • a direct current transmission network (3) comprising a group (2) of electricity transmission lines (4) linked to one another, each transmission line (4) comprising a pair of two line circuit breakers (5a, 5b) arranged at the opposite ends of said transmission line (4);
   • a number N of stations (6) for converting alternating current to direct current each associated with a safety system (7), each converter station (6) being linked to the group (2) of transmission lines (4) and being associated with a maximum contribution of short-circuit current,

   **characterized in that**:

   • each safety system (7) is capable of interrupting a direct current corresponding to the maximum contribution of short-circuit current of the associated converter station (6);
   • the line circuit breakers (5a, 5b) each have a breaking capacity capable of interrupting a direct current corresponding to the highest of the maximum contributions of short-circuit current of the converter stations (6);
   • the installation is configured to send an opening signal to each safety system (7) when a short-circuit fault originating from the group (2) of transmission lines (4) is detected on said safety system (7);
   • the installation is configured, for each pair of line circuit breakers (5a, 5b), to send an opening signal to the line circuit breakers (5a, 5b) of said pair when the short-circuit fault is detected on the line circuit breakers (5a, 5b) of said pair and when said short-circuit fault is located between the line circuit breakers (5a, 5b) of said pair.

11.  The installation as claimed in the preceding claim, **characterized in that** it comprises the software and hardware elements for implementing the method as claimed in any of claims 1 to 9.

Figure 1

Figure 2

Figure 3

Données locales

Données de communication

Figure 4

1000

1003

5a, 5b

A

V

1001

1002

→ Données locales

┄┄► Données de
communication

Figure 5

1

5a          2          5b

Rf

7a

4

6

7b

Figure 6

Détection du défaut
Identification du défaut
Réduction du courant
Isolation de la ligne en défaut
Restauration

$t_0$   $t_1$   $t_2$   $t_3$     $t_4$      $t_5$

Figure 7

Figure 8

Figure 9

Figure 10

Figure 11

Figure 12

## RÉFÉRENCES CITÉES DANS LA DESCRIPTION

**Documents brevets cités dans la description**

- WO 2013131782 A
- WO 2012123015 A
- CN 105896488
- CN 104993472
- CN 104767188